# DEMANDE DE BREVET EUROPEEN

(11) **EP 0 530 081 A1**
(43) Date de publication de la demande: **03.03.1993**
(21) Numéro de dépôt: 92402312.0
(22) Date de dépôt: 20.08.1992
(51) Int. Cl.: F24F 3/16, F24F 6/00

(54) **Procédé de traitement de l'air dans un ensemble de ventilation ou de conditionnement d'air et moyens destinés à le mettre en oeuvre**

(30) Priorité: 23.08.1991 FR 9110657
(71) Demandeur: Wackermann, Guy, F-67100 Strasbourg (FR)
(72) Inventeur: Wackermann, Guy, F-67100 Strasbourg (FR)

(57) **Abrégé**

L'invention concerne un procédé de traitement de l'air dans un ensemble de ventilation ou de conditionnement d'air.

Ce procédé utilise une zone de lavage ou d'humidification de l'air pour charger le flux d'air circulant dans l'ensemble de ventilation ou de conditionnement d'une humidité ayant des propriétés désinfectantes, obtenue à partir d'une solution liquide. Ceci a pour but d'effectuer l'assainissement et la désinfection de l'air en circulation, et d'éviter l'entartrage et le nettoyage des circuits associés d'eau ou de vapeur.

## Description

La présente invention se rapporte à un procédé de traitement de l'air dans un ensemble de ventilation ou de conditionnement d'air.

Elle se rapporte plus particulièrement à un procédé d'assainissement et de désinfection de l'air et d'anti-entartrage des circuits hydrauliques utilisés.

Elle concerne aussi les moyens spécifiques à mettre en oeuvre pour l'accomplissement du procédé.

Les divers systèmes de conditionnement de l'air avec ou sans climatisation comportent, pour la grande majorité d'entre eux, une zone d'humidification ou de lavage de l'air.

Cette zone a pour premier but d'humidifier l'air en raison de son assèchement dû à son passage préalable sur l'évaporateur du groupe frigorifique destiné à son abaissement en température. Un deuxième but consiste à précipiter les poussières et microparticules vers le bas et à les évacuer par un circuit approprié. La zone d'humidification ou de lavage joue alors le rôle d'un super filtre permettant de débarrasser le flux d'air de diverses microparticules non retenues dans les filtres mécaniques amont.

Un troisième but de l'humidification ou du lavage de l'air concerne la dissolution-évacuation des substances et produits contenus dans l'air, solubles dans l'eau.

Par ailleurs, il a été constaté que les divers éléments composant une installation de conditionnement de l'air, notamment ceux placés sur le trajet de l'air, constituent des endroits optimums pour la stagnation et le développement de la flore microbienne saprophyte et pathogène.

Il s'agit notamment de la batterie de l'évaporateur dont la température plus basse favorise la fixation, la concentration puis la dissémination des microorganismes pathogènes ou autres dans un niveau notablement supérieur d'activité.

Par ailleurs, l'humidification ou le lavage de l'air réclame un entretien et un suivi technique accrus de l'installation en raison de l'entartrage prononcé et répétitif du circuit d'eau.

Ne pouvant éviter les trop fréquentes visites et interventions techniques, la tendance actuelle est de supprimer cette zone des petites et moyennes installations.

Malheureusement, si le lavage ou l'humidification de l'air permet d'arriver à une purification physique convenable du flux d'air, cette technique s'avère totalement insuffisante au plan sanitaire. En effet, la désinfection microbienne, bactériologique, virale et la neutralisation des microorganismes ne peuvent être obtenues que de façon imparfaite par des filtres même suivis d'un lavage de l'air.

La présente invention a pour but d'assainir et de désinfecter et plus généralement d'aseptiser l'air traité dans les systèmes de ventilation ou de conditionnement d'air.

Elle a pour but également d'éviter l'entartrage, de faciliter l'évacuation des boues et de désengorger le circuit d'humidification ou de lavage de l'air, ou, tout au moins, de participer de façon suffisamment efficace à ces opérations pour supprimer ces inconvénients antérieurs.

Pour ce faire, la présente invention se rapporte à un procédé d'assainissement, de désinfection de l'air et d'anti-entartrage des circuits de la zone d'humidification ou de lavage de l'air ou d'une telle zone à créer sur une installation de conditionnement de l'air ou de simple ventilation.

Le procédé selon l'invention consiste à charger en humidité le flux d'air de ventilation ou d'air conditionné avec ou à mélanger à celui-ci, par exemple par pulvérisation, une solution aqueuse d'un produit de traitement par une zone d'humidification.

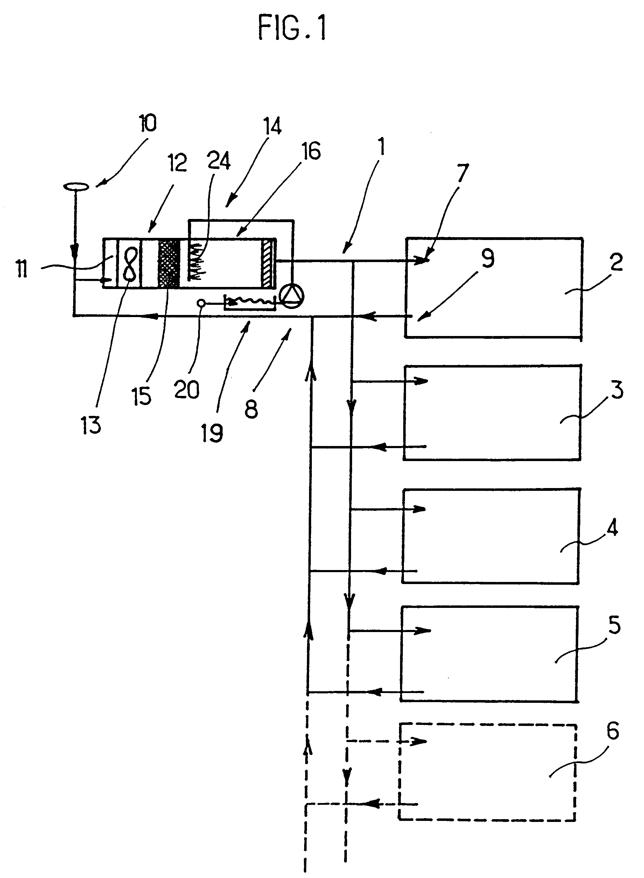

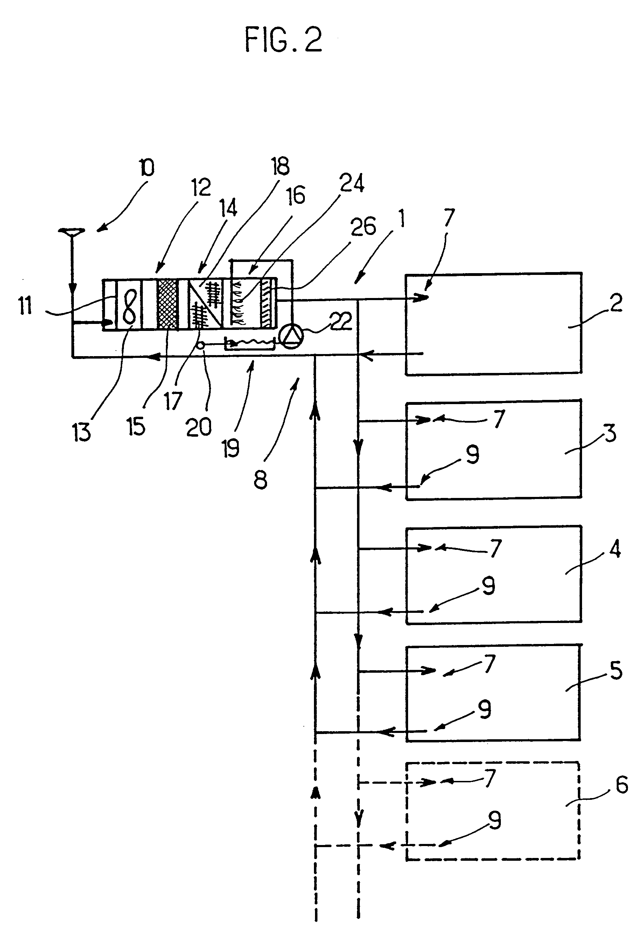

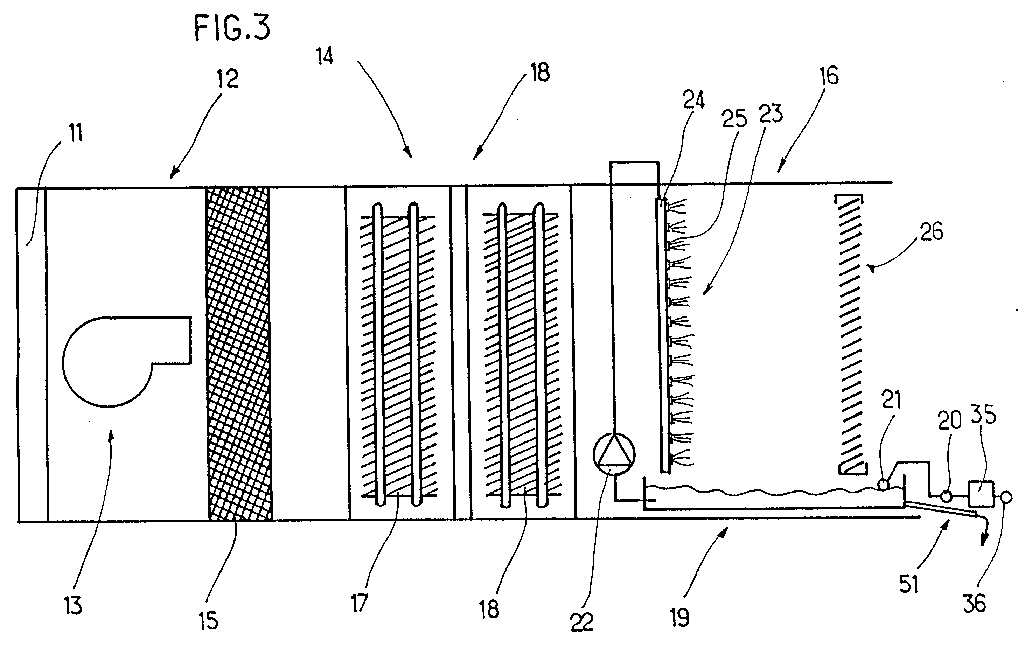

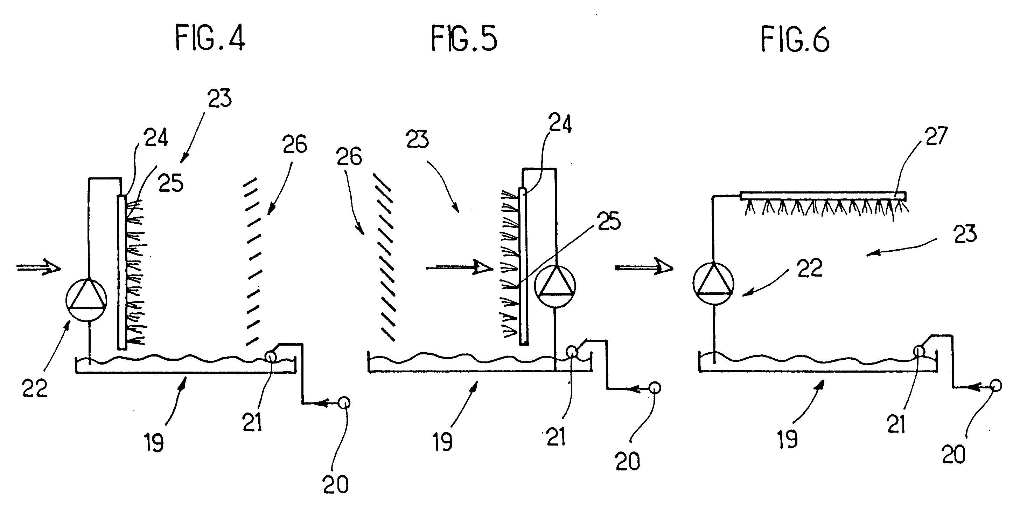

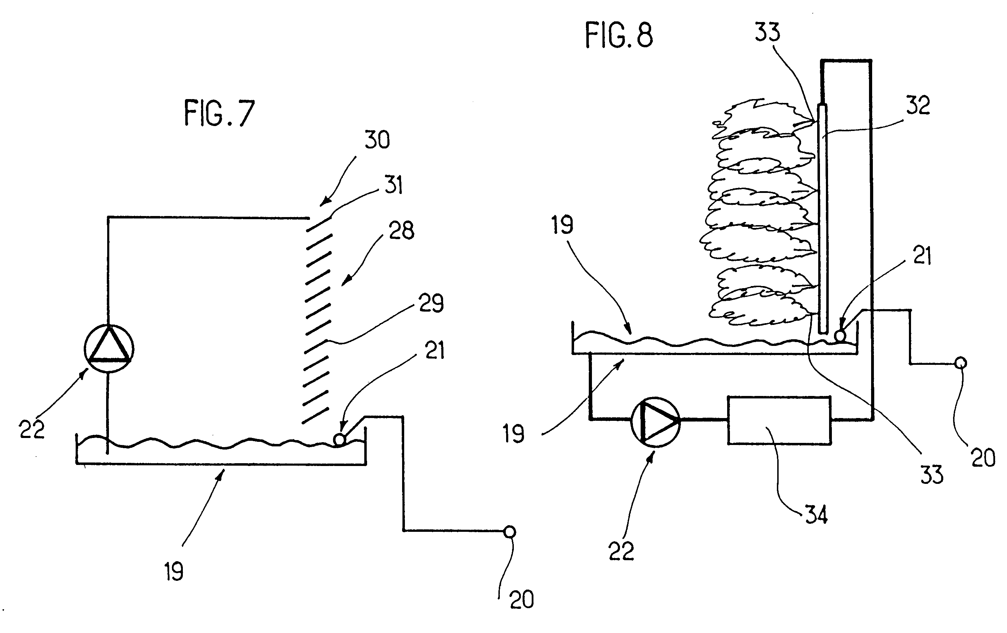

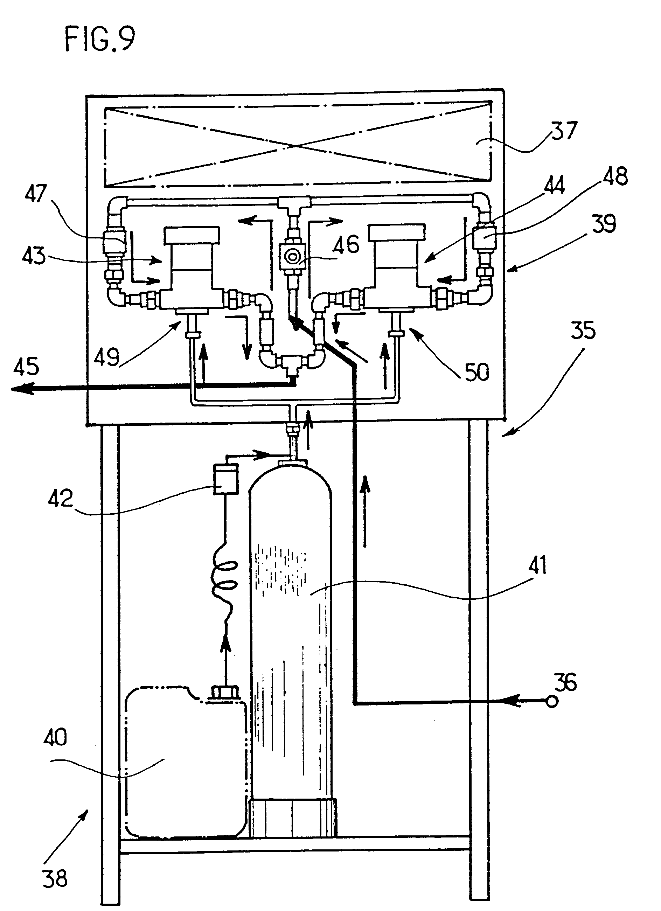

Les caractéristiques techniques et d'autres avantages de l'invention sont consignés dans la description qui suit, effectuée à titre d'exemple non limitatif sur un mode d'exécution en référence aux dessins accompagnants dans lesquels :
. la figure 1 est le schéma d'une installation de ventilation à double flux ;
. la figure 2 est le schéma d'une installation de conditionnement d'air à double flux ;
. la figure 3 est un schéma en coupe de l'unité de conditionnement d'air ;
. la figure 4 est une vue de détail en coupe de la zone d'humidification par gicleurs dans le sens du flux prévue ou modifiée selon la présente invention ;
. la figure 5 est une vue de détail en coupe de la zone d'humidification par gicleurs à contre flux prévue ou modifiée selon la présente invention ;
. la figure 6 est une vue de détail en coupe de la zone d'humidification par ruissellement prévue ou modifiée selon la présente invention ;
. la figure 7 est une vue de détail en coupe de la zone d'humidification par rideau vertical d'eau pulvérisée prévue ou modifiée selon la présente invention ;
. la figure 8 est une vue de détail en coupe de la zone d'humidification par vapeur prévue ou modifiée selon la présente invention ;
. la figure 9 est le schéma de la centrale d'alimentation en produit traitant à partir d'une source d'eau.

Le procédé de traitement de l'air selon l'invention résulte de l'idée générale inventive qui consiste à utiliser ou à créer une zone de lavage ou d'humidification de l'air dans un ensemble de ventilation ou de conditionnement d'air en vue d'introduire dans le flux d'air et de mélanger à celui-ci une pulvérisation, vaporisation ou autre d'une solution d'un produit de traitement destinée à effectuer l'assainissement et la désinfectionaseptisation de l'air.

Cette solution est destinée également à éviter l'entartrage et le nettoyage fréquent des circuits associés d'eau ou de vapeur.

Le procédé s'applique à une installation de ventilation et/ou de conditionnement d'air représentée schématiquement sur les figures 1 et 2 par ses principaux éléments constituants.

L'installation de ventilation visée est à simple flux ou à double flux de même que l'installation de conditionnement d'air.

Bien entendu, les systèmes à double flux sont préférés sur les installations d'un certain volume en raison de l'économie d'exploitation réalisée grâce au recyclage de l'air.

L'installation de base comprend un circuit 1 d'insufflation d'air dans diverses enceintes telles que pièces ou chambres 2, bureaux 3, locaux techniques 4, blocs opératoires 5 ou autres 6 par des bouches d'insufflation telles que 7 et un circuit 8 de récupération par des bouches d'aspiration 9.

Le circuit de l'installation de base comprend d'amont en aval une bouche d'entrée d'air neuf 10 venant se mélanger à l'air du cirrcuit de récupération 8 dans un compartiment d'entrée 11, d'une unité de ventilation ou de conditionnement de l'air 12 formée d'un groupe de ventilation 13, et d'un module de traitement 14, ce dernier comprenant, au moins, un compartiment de filtrage 15 à plusieurs filtres mécaniques et une zone d'humidification 16.

Le module de traitement 14 est raccordé aux différentes bouches d'insufflation 7.

Dans le cas d'une installation de conditionnement d'air, le compartiment de filtrage 15 est suivi d'une batterie de chauffage 17 (figures 2 et 3), puis d'une batterie de réfrigération 18.

Dans la zone d'humidification 16 on met en oeuvre un des divers modes d'humidification ou de lavage de l'air existant.

On distingue, pour les modes connus de l'inventeur, l'humidification par pulvérisation (figures 4, 5 et 6), par ruissellement (figure 7) ou par vapeur (figure 8).

Chacun des modes d'humidification ci-dessus met en oeuvre des moyens de récupération de l'eau sous la forme d'un bac de récupération ou de recyclage 19 relié par des moyens d'alimentation à un réseau de distribution à travers une entrée d'eau 20 commandée par un détecteur de niveau, par exemple à flotteur 21.

Une pompe de circulation 22 alimente en eau sous pression des moyens d'humidification 23.

Ces moyens d'humidification, conformément aux deux premiers modes ci-dessus, comportent respectivement au moins une rampe de pulvérisation 24 de gicleurs 25 projetant chacun un jet d'eau pulvérisée dans le flux d'air dans le sens du flux (figure 4) à contre-flux (figure 5) avec ou sans rideau d'uniformisation 26. Le troisième mode concerne la création d'un rideau vertical d'eau pulvérisée dans le flux d'air, transversalement à celui-ci, par au moins une rampe de pulvérisation horizontale 27 à gicleurs dirigés vers le bas (figure 6).

Un autre mode met en oeuvre un rideau vertical 28 à lamelles inclinées 29 décalées entre elles et montantes dans le sens du flux d'air. Ces lamelles forment un rideau vertical de ruissellement pour l'eau amenée en partie supérieure par un faisceau d'eau sous pression 30 qui vient se briser sur la lamelle supérieure 31 (figure 7).

Les lamelles inclinées 29 horizontales de ce rideau vertical constituent des parois et des chicanes sur lesquelles viennent se briser les microjets de pulvérisation.

Il faut encore ajouter l'humidification par vapeur sortant par une rampe 32 de buses 33 à contre flux. Cette vapeur est produite par un générateur de vapeur 34 à partir de l'eau du bac de récupération 19.

Conformément à l'invention, on injecte en continu ou par séquences dans le circuit d'alimentation en eau des moyens d'humidification de la zone d'humidification, ou de lavage, une solution aqueuse convenablement dosée d'un produit possédant des propriétés désinfectantes et plus généralement d'aseptisation de l'air et d'anti-entartrage. Cette solution de faible concentration car mélangée à l'eau d'alimentation des moyens d'humidification, se trouve par le fonctionnement de ceux-ci intimement mélangée au flux d'air et entraînée par celui-ci dans les enceintes dans lesquelles débouchent les conduits aérauliques de l'installation.

La zone d'humidification est raccordée hydrauliquement à une centrale d'alimentation 35 placée entre l'arrivée d'eau 36 du réseau de distribution et l'entrée hydraulique 20 des moyens de pulvérisation.

Cette centrale d'alimentation 35 assure le dosage et l'injection en continu du produit de traitement dans la conduite d'alimentation du bac de récupération (figure 9).

Elle comprend une unité de contrôle et de commande 37 agissant sur différents organes selon un programme préétabli, une réserve de produit 38 de traitement et un module de dosage-distribution 39.

La réserve de produit se compose d'un bidon-réservoir amovible 40 dans lequel le produit est livré à une concentration donnée et d'un réservoir-tampon 41 alimenté par une pompe 42 en produit de traitement à partir du bidon-réservoir 40 et raccordé hydrauliquement au module de dosage-distribution 39.

Le module de dosage-distribution comporte deux doseurs 43 et 44 montés selon une sortie commune 45 vers l'entrée d'alimentation hydraulique 20 du bac de récupération 19 de la zone d'humidification.

On distingue un doseur initial 43 et un doseur permanent 44 alimenté chacun au réseau d'eau à travers un filtre (non représenté), un réducteur de pression commun 46 et une électrovanne distincte respectivement initiale 47 et permanente 48. L'électrovanne initiale 47 est commandée pour être normalement fermée en régime permanent alors que l'électrovanne permanente 48 reste normalement ouverte.

Les doseurs 43 et 44 sont raccordés en parallèle au réservoir tampon 41 sur leurs entrées respectives 49 et 50. Ces derniers sont réglés pour débiter une solution de concentration fixe, par exemple C*1* pour le doseur initial 43 et C*2* pour le doseur permanent 44.

Ces concentrations peuvent se situer dans le cas d'une installation moyenne d'un débit de 40 m3 d'air par heure dans les gammes suivantes pour un produit de traitement d'une activité désinfectante et anti-séquestrante moyenne :
. C*1* = 0,5 et 1 % en volume fonction de la capacité du bac de recyclage et des fréquences de débourbage.
. C*2* = 0,1 et 0,2 % en volume fonction de la concentration de base c'est-à-dire celle à la livraison du produit de traitement.

On examinera maintenant le fonctionnement de la centrale d'alimentation 35.

Pour ce faire, il faut distinguer le régime initial et le régime permanent.

Le régime initial est celui pendant lequel le bac de récupération 19 se remplit suite à un arrêt des moyens d'humidification ou à une séquence de désembourbage consistant en une évacuation périodique rapide du contenu du bac de récupération en vue d'éliminer les bouespar une sortie d'évacuation 51.

Pendant le régime initial, le bac se remplit avec une solution dite solution-mère, de concentration C*1*, délivrée par le doseur initial 43. Ce doseur est alors seul en circuit par la fermeture de l'électrovanne de régime permanent et l'ouverture de l'électrovanne de régime permanent.

Après remplissage du bac de récupération 19 par la voie du doseur initial 43 jusqu'au niveau imposé par le détecteur, par exemple à flotteur 21, l'appoint est délivré par le doseur de régime permanent 44 selon la concentration C*2* mis en circuit par l'intervertion des états ouvert/fermé des électrovannes 47 et 48 consécutives à une commande appropriée du module de contrôle et de commande 37.

Cet état de régime permanent continuera jusqu'à la prochaine séquence de désembourbage du bac de récupération pour reprendre l'état de régime initial.

## Revendications

1. Procédé de traitement de l'air dans un ensemble de ventilation ou de conditionnement d'air en vue de son assainissement et de sa désinfection caractérisé en ce qu'il consiste à charger d'humidité l'air insufflé , à partir d'une solution liquide agissant à la fois sur l'air en le désinfectant et sur les circuits hydrauliques de la zone d'humdification en les nettoyant, ladite solution liquide se trouvant dans la zone d'humidification ou de lavage de l'air existant sur l'ensemble de ventilation ou de conditionnement de l'air.

2. Procédé selon la revendication 1 caractérisé en ce que la zone d'humidification ou de lavage de l'air est créée en aval du compartiment de filtration d'un ensemble de ventilation.

3. Procédé selon la revendication 1 caractérisé en ce que la zone d'humidification ou de lavage de l'air est créée en aval du groupe chaud/froid d'un ensemble de conditionnement d'air.

4. Dispositif pour la mise en oeuvre du procédé selon l'une des revendications 1 à 3 où la solution liquide est recueillie dans un bac de récupération raccordé à une centrale d'alimentation branchée à une arrivée d'eau , caractérisé en ce qui ladite centrale d'alimentation est branchée à ladite arrivée d'eau au travers d'un régulateur de pression et comprend une unité de contrôle et de commande agissant sur les différents organes selon un programme préétabli, une réserve de produit de traitement et un module de dosage-distribution.

5. Dispositif selon la revendication 4 caractérisé en ce que la réserve de produit se compose d'un bidon-réservoir amovible alimentant à travers une pompe un réservoir-tampon, raccordé hydrauliquemnt au module de dosage-distribution.

6. Dispositif selon les revendications 4 et 5 caractérisé en ce que le module de dosage-distribution comporte un doseur initial et un doseur permanent raccordés chacun au réservoir-tampon par leur entrée en produit concentré et montés selon une sortie commune vers l'entrée d'alimentation du bac de récupération de la zone d'humidification, le doseur initial étant branché à l'arrivée d'eau à travers une électrovanne de régime initial, normalement fermée en régime permanent, le doseur permanent étant branché à l'arrivée d'eau à travers une électrovanne de régime permanent, normalement ouverte en régime permanent.
